Europäisches Patentamt

European Patent Office

Office européen des brevets

(19)

(11) Numéro de publication: **0 187 107**
**A1**

# (12) DEMANDE DE BREVET EUROPEEN

(21) Numéro de dépôt: 85420217.3

(22) Date de dépôt: 04.12.85

(51) Int. Cl.⁴: **A 01 K 59/02**, A 01 K 59/04

(30) Priorité: 05.12.84 FR 8418845

(43) Date de publication de la demande: 09.07.86 Bulletin 86/28

(84) Etats contractants désignés: **BE DE FR GB IT**

(71) Demandeur: **SERINOX S.A., Route Ste-Marguerite B.P. No. 123, F-63307 Thiers (FR)**

(72) Inventeur: **Furodet, Philippe, Pont Astier, F-63190 Lezoux (FR)**

(74) Mandataire: **Caradot, Patrice, MAISONNIER, CORNILLON, CARADOT 29 rue de la République B.P. 247, F-42006 Saint Etienne Cédex (FR)**

(54) **Dispositif pour le traitement du miel.**

(57) L'invention se rapporte au domaine technique de l'apiculture et concerne un dispositif perfectionné permettant la désoperculation, l'extraction et le filtrage simultané du miel. Dans une cuve support (1), se trouvent fixés l'extracteur (2), le bac à désoperculer rotatif (3) tandis qu'un dispositif de filtration (4, 5) est situé sous la base de ces appareils au-dessus d'un collecteur (1b). Des moyens d'entraînement (non représentés) permettent d'entraîner ces appareils en rotation.

Application: traitement rapide du miel en rayons.

EP 0 187 107 A1

## DISPOSITIF POUR LE TRAITEMENT DU MIEL EN RAYONS

L'invention concerne un dispositif perfectionné pour le traitement du miel (domaine technique de l'apiculture).

On sait que le traitement du miel nécessite plusieurs opérations effectuées de façon successive au moyen des appareils adaptés.

Les cadres rayonnés doivent tout d'abord être soumis à une opération de désoperculation, sur un bac à désoperculer, c'est-à-dire que les opercules sont extraits au moyen d'un couteau spécial.

Puis les cadres ainsi désoperculés sont installés dans des appareils d'extraction du miel par centrifugation, ces appareils étant entraînés en rotation rapide pour extraire le miel des rayons.

Le miel est disposé ensuite dans un saturateur/maturateur, c'est-à-dire un appareil de décantation avec filtres multiples pour affiner le miel.

Outre que ces dispositifs sont très encombrants, ce qui les rend difficiles à transporter pour l'exportation ou pour l'exploitation, il en résulte une multiplication d'appareils qui augmente le temps de traitement, ce qui nuit à la qualité du miel obtenu et pèse sur les coûts de production.

Afin de pallier à ces inconvénients, le dispositif selon l'invention permet d'effectuer ces opérations successives de manière simultanée sans perte de temps pour l'opérateur.

Le dispositif selon l'invention comprend une cuve support disposée pour recevoir au moins un appareil de désoperculation et un appareil d'extraction centrifuge du miel.

Selon une autre caractéristique de l'invention, l'appareil de désoperculation est formé d'un récipient cylindrique perforé, entraîné en rotation, de façon à agir par centrifugation sur les opercules pour en extraire le miel et récupérer la cire.

Selon une autre caractéristique de l'invention, l'appareil centrifuge est formé d'un récipient cylindrique tournant entre les parois de la cuve support.

2

Dans cette variante de réalisation, ces deux appareils sont disposés cote à cote dans une cuve support sensiblement parallélépipédique.

Selon une variante préférentielle de l'invention, l'appareil centrifuge tourne entre les parois d'un cylindre lisse sans fond qui peut également tourner à une vitesse sensiblement identique, afin de limiter l'émulsion du miel due à l'énergie cinétique.

Selon une autre variante de l'invention, l'appareil de désoperculation est situé au-dessus et tourne autour du même axe que l'appareil centrifuge destiné à l'extraction. Dans cette variante de réalisation, la forme extérieure de la cuve support est cylindrique, de préférence.

Selon une autre caractéristique de l'invention, un ou plusieurs filtres sont disposés respectivement sous l'appareil de désoperculation et sous l'extracteur centrifuge.

Selon un mode de réalisation, ces filtres pourront être dans des tiroirs amovibles coulissant horizontalement dans des guides prévus à cet effet dans la cuve support.

Selon une autre caractéristique de l'invention, un collecteur est disposé au fond de la cuve support, incliné selon plusieurs directions de façon à former un canal permettant de guider l'écoulement du miel vers une ouverture prévue à cet effet dans la cuve support.

Selon une variante de réalisation, ce collecteur est formé directement par le fond de la cuve.

Des moyens appropriés, robinets etc... sont installés pour obturer l'ouverture prévue dans le bas de la cuve support. Ils pourront être compatibles avec le système de branchement d'une pompe.

Selon une autre caractéristique de l'invention, des moyens de stockage des cadres sont prévus dans la cuve support pour faciliter leur manutention. Par exemple, ces moyens peuvent être des glissières verticales solidaires de parois installées dans la cuve support, participant accessoirement à sa rigidité.

Selon une autre caractéristique de l'invention, l'appareil à désoperculer et l'extracteur peuvent être entraînés en rotation manuellement. Selon un mode de réalisation préférentiel de l'invention, l'ensemble sera entraîné par un moteur électrique pouvant être relié aux axes de ces dispositifs par un système débrayable.

Selon une autre caractéristique de l'invention, ce système débrayable pourra être formé par une pièce femelle tournante reliée au moteur et comportant un dispositif coopérant avec un méplat prévu sur les axes des dispositifs à entraîner.

0187107

3

On peut ainsi retirer vers le haut ces dispositifs (soit l'extracteur, soit l'appareil à désoperculer).

Selon une autre caractéristique de l'invention, un seul moteur pourra entraîner plusieurs axes, par exemple au moyen de poulies et de courroies de type connu.

Selon encore une autre caractéristique du dispositif selon l'invention, la cuve support est réalisée à partir d'une base parallélépipédique sur laquelle sont rapportés :

- D'une part, un bac à désoperculer situé au-dessus de l'appareil de désoperculation

- D'autre part, un élément rapporté cylindrique ou parallélépipédique supportant à sa partie supérieure une traverse sur laquelle pourra par exemple être fixé le système d'entraînement de l'extracteur, ou tout autre dispositif annexe.

Ces différents éléments rapports seront fixés à la cuve support par des systèmes connus, des nervures longitudinales obtenues par emboutissage, permettant de les positionner sur celle-ci.

Ce système permet un démontage rapide et un transport sous faible volume, les parties supérieures amovibles pouvant être placées dans la cuve support. De plus, cet ensemble est aisément démontable et transportable.

Les dessins annexés, donnés à titre d'exemples non limitatifs, permettront de mieux comprendre les caractéristiques de l'invention.

La figure 1 est une vue en perspective d'une variante de réalisation du dispositif selon l'invention.

La figure 2 est une vue en perspective d'une variante de réalisation du dispositif selon un autre mode de réalisation.

La figure 3 est une vue en coupe longitudinale selon la ligne 3.3. (fig. 1).

La figure 4 est une vue en perspective d'une variante simplifiée du dispositif.

La figure 5 est une vue schématique, illustrant le fonctionnement de la variante de réalisation définie par la figure 2.

La figure 6 est une vue en coupe du montant tournant débrayable entraînant l'appareil extracteur/centrifuge dans la cuve.

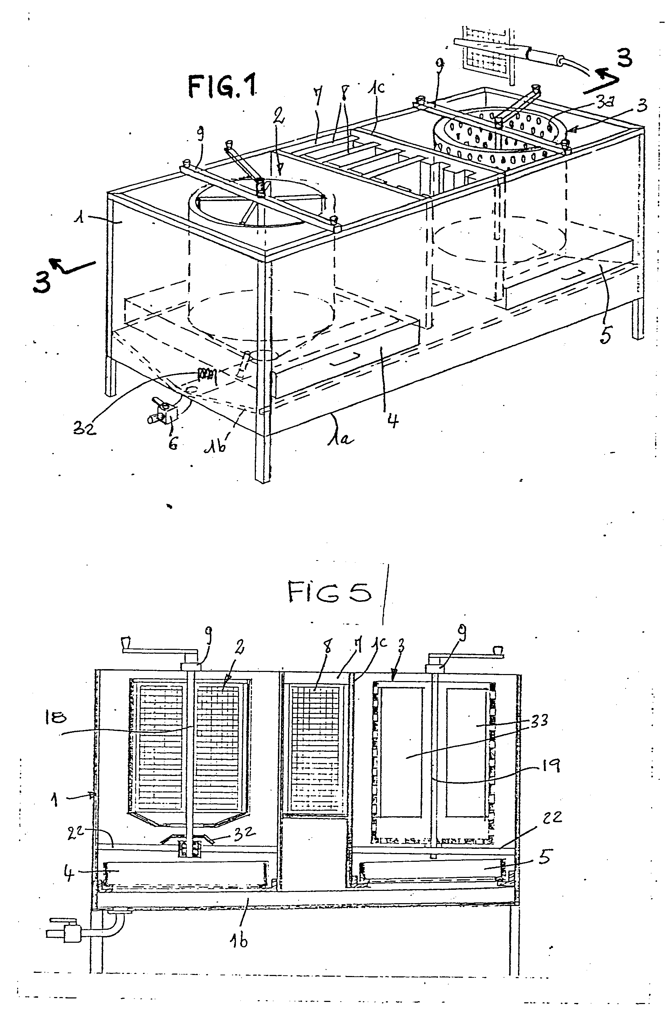

On a représenté sur la figure 1 une cuve support (1) parallélépipédique recevant à l'intérieur au moins un appareil extracteur (2) et un appareil à désoperculer (3).

L'appareil à désoperculer (3) comprend un cylindre (3a) dont la paroi et le fond sont perforés, l'ensemble étant tournant pour agir par centrifugation sur les opercules pour séparer le miel et la cire.

0187107

4

L'appareil extracteur (2) est également réalisé de façon cylindrique.

Sous la base de l'extracteur (2) et de l'appareil à désoperculer (3), sont montés des organes filtrants (4) (5). Ceux-ci peuvent être par exemple des tiroirs disposés en surélévation du fond (1a) de la cuve support (1) afin de libérer un espace libre faisant collecteur (1b) pour recueillir le miel provenant de l'appareil à désoperculer (3) et de l'extracteur (2).

Un robinet (6) pour l'évacuation du miel filtré sera placé sur la paroi de la cuve support (1) à l'extrémité du collecteur (1b). Il peut être relié à un moyen de pompage.

L'extracteur (2) et l'appareil à désoperculer (3) peuvent être entraînés en rotation manuellement ou par un moteur électrique (non représenté) de façon séparée ou simultanée.

Des moyens de stockage (glissières 7) permettent le stockage, par exemple vertical, des cadres (8).

Une traverse (9) solidaire des parois de la cuve support (1) permet d'appuyer les cadres (8) pendant l'opération de désoperculation.

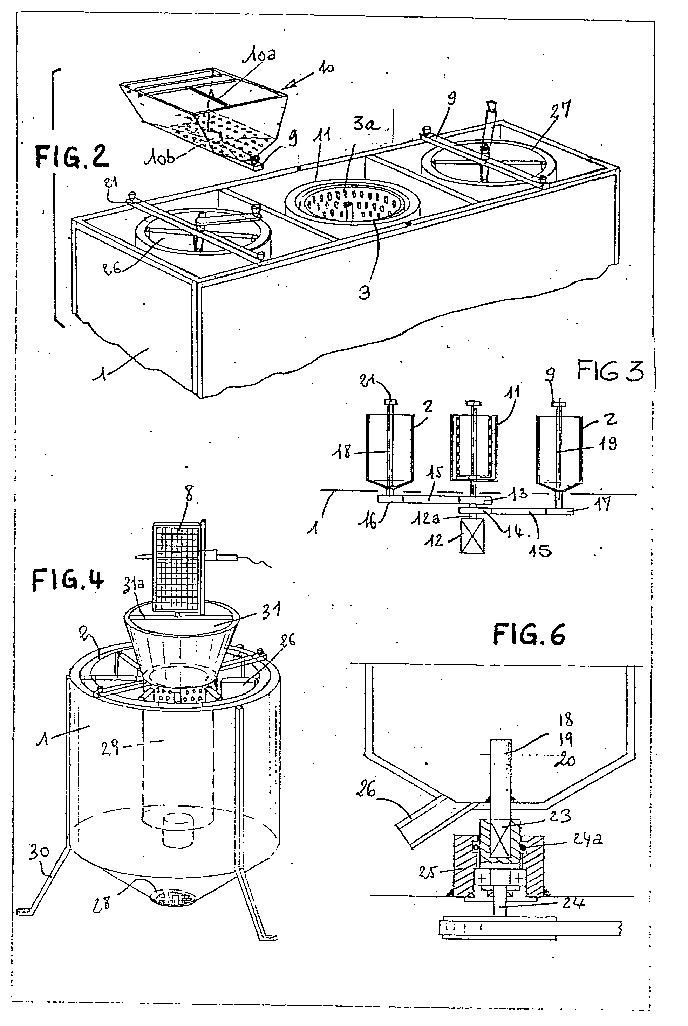

On a représenté sur la figure 2 une variante de réalisation du dispositif selon l'invention.

Un bac (10) comportant un appui (10a) pour les cadres (8) et un fond profilé avec un trou d'évacuation (10b) est disposé au-dessus de l'appareil de désoperculation (3) en appui sur une ou plusieurs traverses (9). Ce bac (10) peut permettre le stockage des cadres (8).

Selon un mode de réalisation préférentiel de l'invention, le cylindre perforé (3a) de l'appareil à désoperculer (3) est disposé concentriquement à l'intérieur d'un cylindre (11) sans ouvertures, les deux cylindres étant entraînés simultanément en rotation à des vitesses identiques, de façon à récupérer le miel à vitesse sensiblement nulle, de façon à éviter son émulsion, le miel étant récupéré par une ouverture centrale (non représentée) du cylindre (11).

On a représenté sur la figure 3 un moteur d'entraînement (12) situé sous le dessous de la cuve support (1) avec un arbre (12a) accouplé à l'axe de l'appareil à désoperculer (3), un système de poulies (13) (14) entraînant des courroies (15) reliées à des poulies débrayables (16) (17) montées sur les axes de rotation (18) (19) des extracteurs ou l'axe de rotation (20) de l'appareil de désoperculation (3).

On peut donc faire tourner ainsi simultanément les extracteurs (2) et l'appareil à désoperculer (3).

Ces axes peuvent s'appuyer sur les traverses (9) ou (21) montées sur le sommet de la cuve support.

On a représenté sur la figure 4 une variante simplifiée du dispositif selon l'invention dans laquelle l'extracteur (2) est monté dans une cuve support (1) cylindrique dont la base est équipée d'une grille amovible (28) pour la filtration du miel, tandis qu'un réservoir cylindrique (29) est monté concentriquement au corps de l'extracteur (2). La cuve cylindrique support (1) est montée sur un trépied (30) tandis qu'un bac tronconique (31) est placé au-dessus de l'appareil à désoperculer. Une traverse (31a) permet de supporter les cadres (8).

On a représenté sur la figure 5 une vue en coupe de la figure (1).

Les axes de rotation (18) et (19) s'appuient à leur base sur des traverses (22).

On a représenté sur la figure 6 les axes de rotation (18) (19) (20) présentant au bout un méplat (23) coopérant avec une portée cylindrique complémentaire (24a) d'un arbre (24) tournant dans un palier étanche (25). Un tuyau d'évacuation (26) est disposé latéralement sur le fond du collecteur en débouchant au-dessus des organes de filtration.

On comprend ainsi aisément la nouveauté et les avantages du dispositif précédemment décrit.

Les principaux éléments du traitement des rayons de miel sont réunis dans une cuve support unique, permettant leur utilisation de façon simultanée et par un seul opérateur.

Un système de moteur unique permet de commander le système de désoperculation et l'extracteur centrifuge.

Ces deux éléments peuvent être aisément retirés vers le haut grâce à un système de liaison débrayable entre l'entraînement des moteurs et les axes de ces deux éléments.

Le miel est récupéré à la base de la cuve support par un collecteur unique, évitant ainsi les manipulations nuisibles à sa qualité. Des résistances électriques (32) pourront être installées dans le collecteur (1b).

6

1. Dispositif pour le traitement du miel en rayons, c'est-à-dire la désoperculation du miel et l'extracteur à partir des cadres, caractérisé en ce qu'il comporte une cuve support (1) dans laquelle se trouvent fixés au moins un appareil de désoperculation (3) rotatif ou à un bac fixe et un extracteur (2) dont les fonds se trouvent surélevés par rapport au collecteur (1b) situé au fond de cette axe support (1).

2. Dispositif pour le traitement du miel, selon la revendication 1, caractérisé en ce que des organes filtrants (4) (5) sont interposés entre le fond de l'appareil de désoperculation (3) et de l'extracteur (2) et le fond de la cuve support (1).

3. Dispositif pour le traitement du miel selon l'une quelconque des revendications 1 et 2, caractérisé en ce que l'extracteur (2) et l'appareil de désoperculation (3) sont juxtaposés dans la cuve support (1).

4. Dispositif pour le traitement de miel selon la revendication (1), caractérisé en ce que l'extracteur (2) et l'appareil de désoperculation (3) sont disposés concentriquement dans la cuve support (1), celui-ci étant situé au-dessus de l'extracteur (2).

5. Dispositif selon l'une quelconque des revendications 1, 2 et 3, caractérisé en ce que la cuve support (1) est équipée à sa partie supérieure d'un support (9) pour appuyer les cadres (8).

6. Dispositif pour le traitement du miel, selon l'une quelconque des revendications 1, 3, 4, caractérisé en ce que l'appareil à désoperculer (3) est constitué d'un cylindre (3a) perforé, disposé concentriquement à l'intérieur d'un cylindre (11) lisse sans fond, les deux cylindres étant entraînés en rotation à des vitesses identiques.

7. Dispositif pour le traitement du miel selon l'une quelconque des revendications 1, 3, 4 et 5, caractérisé en ce que les axes de rotation (18) et (19) des extracteurs (2) et de l'appareil à désoperculer (3) sont liés à leur partie supérieure aux traverses (9) et accouplés à leur base de façon débrayable à un arbre (24) entraîné par des poulies (16) (17) reliées à au moins un moteur (12).

8. Dispositif selon les revendications 1, 7, caractérisé en ce que la cuve (1) est équipée d'un appareil centrifugeur de désoperculation (3) ou d'un bac à désoperculer, disposé entre deux extracteurs (2), l'appareil à désoperculer (3) et les deux extracteurs (2) étant assujettis à des moyens conformes pour assurer à volonté l'entraînement simultané en rotation de l'appareil à désoperculer (3) avec l'un ou l'autre des extracteurs (2).

9. Appareil pour le traitement du miel selon la revendication 1, caractérisé en ce que le collecteur (1b) est agencé et coopère avec des moyens (6) d'évacuation du miel filtré, ledit collecteur étant profilé et/ou incliné en direction du moyen (6) susceptible d'être relié à un moyen de pompage, des résistances électriques ( 32 ) étant incorporées dans le collecteur (1b).

0187107

FIG.1

FIG 5

2/2          0187107

FIG.2

FIG.3

FIG.4

FIG.6

**Office européen
des brevets**

**RAPPORT DE RECHERCHE EUROPEENNE**

0187107

Numéro de la demande

EP 85 42 0217

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 511 844 (VIDAL)<br>* Figures 1-3; page 1, ligne 11 - page 2, ligne 28; revendication 3 * | 1 | A 01 K 59/02<br>A 01 K 59/04 |
| A | | 3 | |
| | --- | | |
| X | FR-A-1 035 860 (BARADEL)<br>* En entier * | 1 | |
| A | | 2,5 | |
| | ----- | | |

DOMAINES TECHNIQUES RECHERCHES (Int. Cl.4)

A 01 K

Le présent rapport de recherche a été établi pour toutes les revendications

| Lieu de la recherche | Date d'achèvement de la recherche | Examinateur |
|---|---|---|
| LA HAYE | 18-03-1986 | VILBIG K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82